# EUROPÄISCHE PATENTSCHRIFT

(11) **EP 2 641 443 B1**
(45) Veröffentlichungstag und Bekanntmachung des Hinweises auf die Patenterteilung: **03.12.2014**
(21) Anmeldenummer: 11775791.4
(22) Anmeldetag: 26.10.2011
(51) Int. Cl.: H04W 74/08, H04W 72/00

(54) **Verfahren und Basisstation zum priorisieren von mobilen Endgeräten**
Method and base station to prioritise mobile devices
Méthode et procédé pour prioriser des dispositifs mobiles

(30) Priorität: 15.11.2010 DE 102010051431
(43) Veröffentlichungstag der Anmeldung: 25.09.2013
(73) Patentinhaber: Rohde & Schwarz GmbH & Co. KG, 81671 München (DE)
(72) Erfinder: KOTTKAMP, Meik, 81379 München (DE); SCHLIENZ, Jürgen, 85586 Poing (DE)
(74) Vertreter: Körfer, Thomas
(86) Internationale Anmeldenummer: PCT/EP2011/068739
(87) Internationale Veröffentlichungsnummer: WO 2012/065818

(56) Entgegenhaltungen:
- WO-A1-2008/115486
- US-A1- 2006 111 104
- US-B1- 6 400 695

## Beschreibung

Die Erfindung betrifft eine Basisstation, insbesondere eine LTE-Basisstation (engl. long term evolution; dt. Langzeitentwicklung) und ein Verfahren für eine solche Basisstation, um Kollisionen beim Erstzugriff von einer Vielzahl von mobilen Endgeräten auf die LTE-Basisstation zu reduzieren.

LTE-Basisstationen werden nicht nur in Großstädten und Ballungszentren installiert, sondern sie sollen vor allem auch in ländlichen Gebieten einen Breitbandzugang zu Kommunikationsnetzen, wie dem Internet, ermöglichen. Je nach zu Verfügung stehender spektraler Bandbreite können Geschwindigkeiten von mehr als 100 MBit/s im Downlink (dt. Abwärtspfad) und mehr als 50 MBit/s im Uplink (dt. Aufwärtspfad) erreicht werden. Bei derart hohen und in vielen Gegenden bisher nicht vorhandenen Geschwindigkeiten erschließen sich zukünftig neue Anwendungsmöglichkeiten. Gerade die Maschine-zu-Maschine-Kommunikation (auch M2M-Kommunikation) wird künftig hohe Wachstumsraten aufweisen. Neben Fahrkarten- und Getränkeautomaten können auch Stromzähler und Gaszähler mit einem übergeordneten Steuersystem verbunden werden, um Füllstände und/oder Verbrauchswerte nahezu in Echtzeit zu übertragen. Die Anzahl an mobilen Endgeräten, die auf eine LTE-Basisstation zugreifen, setzt sich daher künftig nicht mehr nur aus Mobiltelefonen, die von einem Benutzer bedient werden, sondern in zunehmendem Maße auch aus Modem- und Datenkarten zusammen, die in autonomen Systemen integriert sind. Durch die zu erwartende höhere Anzahl an mobilen Teilnehmern innerhalb eines LTE-Netzes steigt auch die Wahrscheinlichkeit dass Kollisionen beim Erstzugriff dieser mobilen Endgeräte auf eine LTE-Basisstation auftreten.

Aus der EP 1 901 574 A1 sind eine Vorrichtung und eine Methode bekannt, um Kollisionen zwischen verschiedenen mobilen Endgeräten beim Erstzugriff auf die Basisstation zu erkennen.

Nachteilig an der EP 1 901 574 A1 ist, dass die Kollisionen beim Erstzugriff von verschiedenen mobilen Endgeräten auf eine LTE-Basisstation zwar erkannt werden, aber keine zuverlässigen Mittel bereitgestellt werden, um diese Kollisionen zu verringern. Gerade in Fällen, in denen eine große Anzahl an mobilen Endgeräten die zur M2M-Kommunikation dienen, auf eine LTE-Basisstation zugreifen möchten, können die dadurch auftretenden Kollisionen mit mobilen Endgeräten, die verschiedenen Benutzern zugeordnet sind, dazu führen, dass der Kommunikationszugang für diese Benutzer erheblich eingeschränkt ist oder überhaupt nicht mehr zur Verfügung steht.

Es ist daher die Aufgabe der Erfindung, eine Basisstation und ein Verfahren für eine Basisstation zu schaffen, die das Auftreten von Kollisionen beim Erstzugriff einer Vielzahl von mobilen Endgeräten zuverlässig verringert.

Die Aufgabe wird bezüglich des Verfahrens für die Basisstation durch die Merkmale des Anspruchs 1 und bezüglich der Basisstation durch die Merkmale des Anspruchs 11 gelöst. In den Unteransprüchen sind vorteilhafte Weiterbildungen des erfindungsgemäßen Verfahrens für eine Basisstation und für die erfindungsgemäße Basisstation angegeben.

Das erfindungsgemäße Verfahren zum Reduzieren von Kollisionen beim Erstzugriff von einer Vielzahl von mobilen Endgeräten auf eine Basisstation, die eine Steuereinheit aufweist, wobei die Steuereinheit zumindest eine Zugriffsressource verwaltet, weist die nachfolgenden Verfahrensschritte auf. In einem ersten Verfahrensschritt wird eine Priorität durch die Steuereinheit eingestellt, wobei die Priorität angibt, welches mobile Endgerät sich mit der zumindest einen Zugriffsressource verbinden darf. In einem zweiten Verfahrensschritt wird die Priorität durch die LTE-Basisstation auf zumindest einem bekannten Kanal ausgesendet.

Es ist besonders vorteilhaft, dass bei dem erfindungsgemäßen Verfahren eine Priorität durch die Steuereinheit eigestellt wird, wobei die Priorität angibt, welches mobile Endgerät sich mit der zumindest einen Zugriffsressource verbinden darf und dass diese Priorität durch die Basisstation auf zumindest einem bekannten Kanal ausgesendet wird. Dadurch, dass die Priorität auf zumindest einem bekannten Kanal ausgesendet wird, wird diese von den mobilen Endgeräten empfangen. In Abhängigkeit der empfangenen Priorität verbinden sich die mobilen Endgeräte im Folgenden mit zumindest einer Zugriffsressource oder sie warten bis die Priorität gesenkt wird, um sich im späteren Verlauf mit der zumindest einen Zugriffsressource verbinden zu können. Die Anzahl der mobilen Endgeräte, die sich mit der zumindest einen Zugriffsressource verbinden möchten, kann auf diese Art und Weise gesenkt werden, wodurch sich auch die Anzahl der Kollisionen beim Erstzugriff durch die mobilen Endgeräte auf eine Basisstation verringert.

Die erfindungsgemäße Basisstation zum Reduzieren von Kollisionen beim Erstzugriff von einer Vielzahl von mobilen Endgeräten weist eine Steuereinheit auf, wobei die Steuereinheit zumindest eine Zugriffsressource verwaltet, wobei eine Priorität die angibt, welches mobile Endgerät sich mit der zumindest einen Zugriffsressource verbinden darf, durch die Steuereinheit einstellbar ist und wobei die Priorität durch die Basisstation auf zumindest einem bekannten Kanal aussendbar ist.

Besonders vorteilhaft ist es, dass innerhalb der LTE-Basisstation eine Steuereinheit eine Priorität einstellen kann, wobei die Priorität angibt, welches mobile Endgerät sich mit der zumindest einen Zugriffsressource verbinden darf und wobei die Priorität durch die LTE-Basisstation auf zumindest einem bekannten Kanal aussendbar ist.

Die Erfindung bezieht sich zwar hauptsächlich auf LTE-Basisstationen, ist aber auch für Basisstationen anderer Mobilfunkstandards anwendbar. Im Folgenden ist daher ohne Beschränkung der Allgemeinheit von LTE-Basisstationen die Rede.

Dadurch, dass die Priorität durch die LTE-Basisstation auf zumindest einem bekannten Kanal aussendbar ist, ist diese für alle mobilen Endgeräte empfangbar. Alle mobilen Endgeräte können anhand der empfangenen Priorität nun überprüfen, ob sie auf die zumindest eine Zugriffsressource zugreifen dürfen oder so lange warten müssen, bis die Priorität entsprechend gesenkt ist. Auf diese Art und Weise kann die Anzahl der gleichzeitigen Erstzugriffe von den mobilen Endgeräten gesenkt werden, sodass dadurch die Wahrscheinlichkeit von Kollisionen verringert wird.

Ein weiterer Vorteil des erfindungsgemäßen Verfahrens besteht, wenn die Priorität dann erhöht wird, wenn im Vergleich zu den freien Zugriffsressourcen viele mobile Endgeräte auf die LTE-Basisstation zugreifen und/oder viele Kollisionen auftreten und/oder wenn die Priorität erniedrigt wird, wenn im Vergleich zu den freien Zugriffsressourcen wenige mobile Endgeräte auf die LTE-Basisstation zugreifen und/oder wenige Kollisionen auftreten. Von Vorteil ist dabei, dass die Priorität dynamisch entsprechend der jeweiligen Situation eingestellt werden kann. Dadurch wird erreicht, dass die freien Zugriffsressourcen optimal ausgenutzt werden können, wobei gleichzeitig die Wahrscheinlichkeit für das Auftreten von Kollisionen gesenkt wird.

Ein weiterer Vorteil des erfindungsgemäßen Verfahrens besteht, wenn die Priorität über einen vorhandenen oder neu erzeugten Systeminformationsbereich ausgesendet wird, wobei der vorhandene oder neu erzeugte Systeminformationsbereich auf einem gemeinsamen DownlinkKanal übertragen wird. Weil jedes mobiles Endgerät vor dem Erstzugriff auf eine LTE-Basisstation die übertragenen Informationen in dem Systeminformationsbereich empfängt, wird sichergestellt, dass das mobile Endgerät erst dann auf eine LTE-Basisstation zugreift, wenn es die Priorität erlaubt.

Außerdem besteht ein Vorteil des erfindungsgemäßen Verfahrens, wenn die Steuereinheit die Anzahl der Zugriffsressourcen erhöht oder verringert. Sobald die Häufigkeit von Kollisionen ansteigt, kann die Steuereinheit die Priorität erhöhen und gleichzeitig ebenfalls die Zugriffsressourcen vergrößern, wodurch gleichzeitig mehr mobile Endgeräte auf eine LTE-Basisstation zugreifen können und sich insgesamt die Wahrscheinlichkeit für Kollisionen verringert.

Schlussendlich besteht bei dem erfindungsgemäßen Verfahren ein Vorteil, wenn die Steuereinheit die Priorität anhand von Erfahrungswerten und/oder durch Auswerten von Statusinformationen erhöht oder verringert, wobei es sich bei den Statusinformationen um Ereignisse wie Stromausfälle oder das Neustarten der LTE-Basisstation handelt. Gerade Statusinformationen wie Stromausfälle oder das Neustarten der eigenen Basisstation führen dazu, dass eine Vielzahl von mobilen Endgeräten plötzlich einen Erstzugriff auf die LTE-Basisstation ausführen. Werden solche Statusinformationen von der Steuereinheit bereits frühzeitig ausgewertet, so kann die Priorität schon dann erhöht werden, noch bevor sich die Vielzahl der mobilen Endgeräte mit einem Erstzugriff auf die LTE-Basisstation verbinden möchten.

Ein weiterer Vorteil der erfindungsgemäßen LTE-Basisstation besteht, wenn die Priorität während einer bestimmten Zeit, insbesondere während der Nacht, durch die Steuereinheit verringerbar ist und/oder wenn die Priorität während einer bestimmten Zeit, insbesondere tagsüber, durch die Steuereinheit erhöhbar ist. Dadurch ist sichergestellt, dass mobile Endgeräte, die hauptsächlich zur M2M-Kommunikation dienen, nur dann auf die LTE-Basisstation zugreifen können, wenn wenige mobile Endgeräte, die normalen Benutzern zugeordnet sind, mit der LTE-Basisstation verbunden sind. Das automatisierte Ablesen von z.B. Stromzählern wird dadurch auf eine Zeit verschoben, in der die LTE-Basisstation wenig ausgelastet ist. Dadurch werden die Ressourcen der LTE-Basisstation gleichmäßig verteilt über den ganzen Tag genutzt, was dazu führt, dass gerade in Spitzenlastzeiten eine ausreichende Anzahl an freien Zugriffsressourcen zu Verfügung steht.

Zusätzlich besteht bei der erfindungsgemäßen LTE-Basisstation ein Vorteil, wenn die Prioritätsklasse eines mobilen Endgeräts durch die LTE-Basisstation veränderbar ist, sobald dieses mit der LTE-Basisstation verbunden ist. Bei Großveranstaltungen, wie zum Beispiel Sportveranstaltungen, befinden sich zum Teil sehr viele mobile Endgeräte in einem zum Teil nur sehr kleinen räumlichen Bereich, der oft nur von einer einzigen LTE-Basisstation versorgt wird. Obwohl die mobilen Endgeräte dabei hauptsächlich normalen Benutzern zugeordnet sind, kann es aufgrund der großen Anzahl an mobilen Endgeräten zu einer erhöhten Wahrscheinlichkeit von Kollisionen kommen. Es ist daher vorteilhaft, wenn die Prioritätsklasse eines mobilen Endgeräts durch die Basisstation veränderbar ist, sobald dieses mit der LTE-Basisstation verbunden ist. Konnte sich ein mobiles Endgerät aufgrund der Zugehörigkeit zu einer hohen Prioritätsklasse mit der LTE-Basisstation verbinden, so kann die LTE-Basisstation dieses mobile Endgerät einer niedrigeren Prioritätsklasse zuweisen, sodass bei einem nächsten Verbindungsversuch ein anderes mobiles Endgerät den Vorzug erhält, welches bei dem vorherigen Verbindungsversuch benachteiligt wurde. Dadurch ist sichergestellt, dass im Mittel alle mobilen Endgeräte, die einem normalen Benutzer zugeordnet sind, mit einer gleichhohen Wahrscheinlichkeit auf eine LTE-Basisstation zugreifen können.

Schlussendlich besteht bei der erfindungsgemäßen LTE-Basisstation ein Vorteil, wenn die mobilen Endgeräte, die direkt mit dem Benutzer interagieren, einer höheren Prioritätsklasse zugeordnet sind, als mobile Endgeräte, die zur M2M-Kommunikation dienen. Dadurch wird erreicht, dass in Spitzenlastzeiten den Benutzern ein Vortritt gewährt wird, weil autonome Systeme, wie zum Beispiel Stromzähler ihre Informationen meist auch zu einem anderem Zeitpunkt übertragen können.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Ausführungsbeispiel eines vereinfachten Ablaufdiagramms für einen Erstzugriff eines mobiles Endgeräts auf eine LTE-Basisstation;
- Fig. 2: ein Ausführungsbeispiel für den Aufbau der erfindungsgemäßen Basisstation;
- Fig. 3: ein Ausführungsbeispiel eines Flussdiagramms für das erfindungsgemäße Verfahren der LTE-Basisstation zum Einstellen einer Priorität;
- Fig. 4: ein Ausführungsbeispiel für das erfindungsgemäße Verfahren, welches das Einstellen der Priorität genauer erläutert; und
- Fig. 5: ein weiteres Ausführungsbeispiel eines Flussdiagramms für das erfindungsgemäße Verfahren, welches das Aussenden der Priorität genauer erläutert.

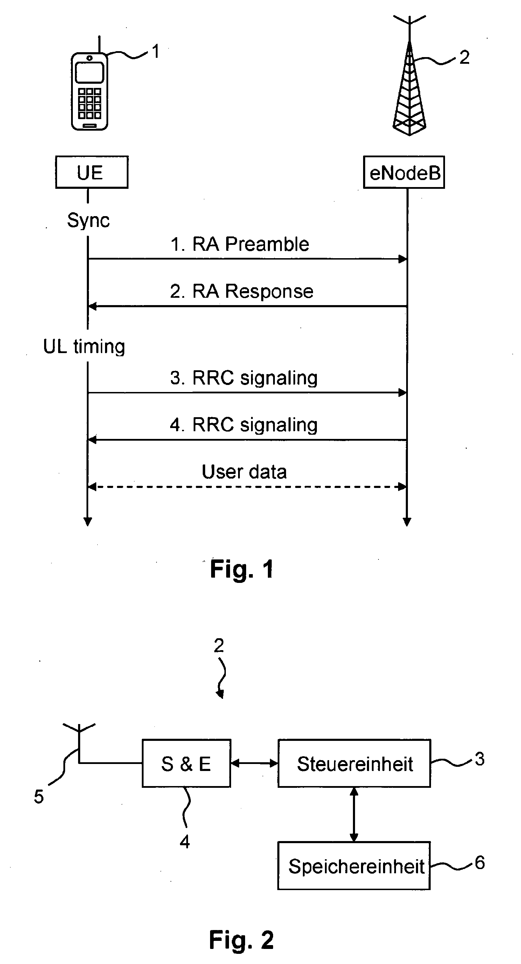

Fig. 1 zeigt ein Ausführungsbeispiel eines Ablaufdiagramms das den Erstzugriff eines mobilen Endgeräts 1 auf eine Basisstation 2 erläutert. Ein solcher Erstzugriff durch das mobile Endgerät 1 auf die LTE-Basisstation 2 erfolgt z.B. nach dem Einschalten des mobilen Endgeräts 1. Das mobile Endgerät 1 wird auch als User Equipment (UE) (deutsch Nutzer Gerät) bezeichnet und die LTE-Basisstation 2 wird auch als eNodeB bezeichnet. Sobald das mobile Endgerät 1 eingeschalten wird, führt es eine Suche nach einer geeigneten LTE-Basisstation 2 durch. Diese Suche führt das mobile Endgerät 1 auch während dem Betrieb durch, um gegebenenfalls auf eine günstigere Basisstation 2 wechseln zu können.

Sobald das mobile Endgerät 1 eine LTE-Basisstation 2 auf einem bestimmten Frequenzbereich entdeckt hat, beginnt es sich mit der LTE-Basisstation 2 zu synchronisieren. Hierfür muss es die Identität der Bitübertragungsschicht der LTE-Basisstation 2 erfassen. Insgesamt gibt es 504 verschiedene Identitäten, die das mobile Endgerät 1 anhand von ein einem ersten und einem zweiten Synchronisationssignal unterscheiden kann, die von der LTE-Basisstation 2 ausgesendet werden. Anschließend wird die Rahmeneinteilung (engl. frame timing) der LTE-Basisstation 2 bestimmt. Sobald dies geschehen ist können die Systeminformationen (engl. system information) der LTE-Basisstation 2 gelesen werden. Diese Informationen sind notwendig, damit ein mobiles Endgerät 1 auf die LTE-Basisstation 2 zugreifen kann und innerhalb dieser ordnungsgemäß arbeitet. Daher werden diese in regelmäßigen Abständen über einen Broadcast (dt. Rundsendung) an alle mobilen Endgeräte 1 ausgesendet. Die Systeminformationen geben unter anderem Aufschluss über die Bandbreite des Downlinks und des Uplinks, bzw. über deren Konfiguration im Falle einer TDD (engl. time division duplex; dt. Zeitduplex) und enthalten außerdem umfangreiche Parameter wie z.B. die Zugriffsressourcen zu nutzen sind, sowie für die Leistungsregelung und vieles mehr.

Die Systeminformation werden in verschiedene Bereiche aufgeteilt und an die mobilen Endgeräte übertragen. Derzeit sind ein MIB (engl. master information block; dt. Masterinformationsbereich) und 13 SIBs (engl. system information block; dt. Systeminformationsbereich), SIB1 bis SIB13, im 3GPP-Standard (engl. 3rd Generation Partnership Project; dt. partnerschaftliches Projekt der dritten Generation) zu LTE definiert. Sowohl der MIB, als auch die 13 SIBs beziehen sich auf den BBCH (engl. broadcast control channel; dt. Rundsendungskontrollkanal) bei dem es sich um einen logischen Kanal (engl. logical channel) handelt. Der MIB wird anschließend auf den BCH (engl. broadcast channel; dt. Rundsendungskanal) abgebildet, wohingegen die 13 SIBs auf den DL-SCH (engl. downlink shared channel; dt. gemeinsamer Downlinkkanal) abgebildet werden. Bei dem BCH und dem DL-SCH handelt es sich um Transportkanäle (engl. transport channel). Der BCH wird auf den PBCH (physical broadcast channel; dt. physikalischer Rundsendungskanal) und der DL-SCH wird auf den PDSCH (engl. physical downlink shared channel; dt. gemeinsamer physikalischer Downlinkkanal) abgebildet.

Der MIB enthält gerade nur so viele Informationen, dass es dem mobilen Endgerät 2 möglich ist, die weiteren SIBs zu dekodieren. Der MIB wird in dem zweiten Slot (dt. Schlitz) des ersten Subframes (dt. Unterrahmen) in den ersten vier OFDM-Symbolen über 72 Unterträgern übertragen. Der MIB wird alle 10 ms übertragen, wobei er alle 40 ms aktualisiert werden kann.

Sobald das mobile Endgerät 2 den MIB dekodiert hat, sind ihm die Frequenz und die Zeit bekannt, um den SIB1 zu empfangen. Der SIB1 kann bevorzugt alle 80 ms aktualisiert werden und wird dazwischen dreimal wiederholt. Der SIB1 beinhaltet weitere Informationen über die Frequenz und die Zeit, die dem mobilen Endgerät 1 ermöglichen, die restlichen SIBs zu empfangen.

Der SIB2 ist im weiteren für die erfindungsgemäße LTE-Basisstation 1 von zentraler Bedeutung. Im SIB2 werden Informationen über die Uplink-Bandbreite und Informationen, die Zugriffsressourcen betreffend, übertragen. Der SIB2 wird dabei bevorzugt alle 160 ms aktualisiert. Alle SIBs werden dabei auf sogenannte SIs (engl. system information messages; dt. Systeminformationsnachrichten) abgebildet, die Transportblöcken entsprechen, die auf dem DL-SCH übertragen werden. Dabei können mehrere SIBs, die mit derselben Periodizität gesendet werden, auf einen SI abgebildet werden. Beispielsweise werden der SIB3 und der SIB4 bevorzugt alle 320 ms aktualisiert, so dass beide SIBs auf den SI-3 abgebildet werden können.

Nachdem das mobile Endgerät 2 alle SIBs ausgewertet hat, kann es einen Verbindungsaufbau (engl. random access) beantragen. Ein solcher Verbindungsaufbau wird z.B. für den Erstzugriff auf eine LTE-Basisstation 2, zum Wiederherstellen einer Verbindung nach einem Fehler in der Übertragungsstrecke (engl. radio link failure) oder bei Übergabe einer Uplink-Synchronisation zu einer neuen LTE-Basisstation 2 benötigt. Gegenstand der erfindungsgemäßen LTE-Basisstation 2 ist dabei das Reduzieren von Kollisionen, die beim simultanen Erstzugriff mehrerer mobiler Endgeräte 2 auf die LTE-Basisstation 2 auftreten können, wie im folgenden noch erläutert wird.

Die Schritte, die das mobile Endgerät 1 ausführt, bis es den MIB und alle SIBs dekodiert hat, werden in dem Ablaufdiagramm aus Fig. 1 durch den Wortlaut "Sync" repräsentiert.

Im Weiteren erfolgt jetzt das Übertragen einer Zugriffs-Präambel (engl. random access preamble) von dem mobilen Endgerät 1 an die LTE-Basisstation 2 (Schritt 1). Die Zugriffs-Präambel wird auf dem PRACH (physical random access channel; physikalischer Direktzugriffskanal) übertragen. Die Frequenz des PRACH und die Zeit, in welcher die Zugriffs-Präambel auf der bestimmten Frequenz übertragen werden darf, sind dem mobilen Endgerät 1 aus der SIB2 bekannt und wird auch als Zugriffsressource (engl. RACH-Ressource) bezeichnet. Insgesamt stehen für jede LTE-Basisstation 2 64 verschiedene Zugriffs-Präambeln zu Verfügung, die allesamt orthogonal zueinander sind. Das mobile Endgerät 1 wählt eine davon zufällig aus und überträgt diese innerhalb einer Zugriffsressource an die LTE-Basisstation 2. Die Zugriffsressource des PRACH weist bevorzugt eine Bandbreite von 1,08 MHz auf und umfasst dabei sechs Ressourcenbereiche. Ein Ressourcenbereich wird dabei bevorzugt auf 12 Unterträgern übertragen.

Die Zugriffsressource steht bei FDD (engl. frequency division duplex; dt. Frequenzduplex) dabei innerhalb eines Subframes (1 ms) alle 20 ms bis hin zu jeder ms zu Verfügung. Bei TDD sind bis zu sechs Zugriffsressourcen innerhalb eines 10 ms Radioframes (dt. Funkrahmen) möglich. Neben der eigentlichen Zugriffs-Präamble, die bevorzugt eine Sequenzlänge von 0,8 ms aufweist, wird noch ein zyklisches Präfix (engl. cyclic prefix) mit einer Dauer von 0,1 ms übertragen. Das Schutzintervall (engl. guard intervall) beträgt für einen räumlichen Abdeckungsbereich der LTE-Basisstation 2 von 15 km ebenfalls 0,1 ms, so dass die gesamte Zugriffs-Präambel innerhalb eines 1 ms langen Subframes übertragen werden kann. Je nach Länge der Sequenz der Zugriffs-Präambel sind bis zu 3 ms notwendig, so dass der Bereich der Zugriffsressource vergrößert werden muss.

Aufgrund der Orthogonalität der Zugriffs-Präambeln können verschiedene mobile Endgeräte 1 bei unterschiedlicher Wahl der Zugriffs-Präambeln diese zur selben Zeit auf der gleichen Zugriffsressource übertragen. Die Sendeleistung mit der diese Zugriffs-Präambeln gesendet werden, wird anhand von Referenzsignalen bestimmt, die von der LTE-Basisstation 2 empfangen werden.

In einem zweiten Schritt erkennt die LTE-Basisstation 2, dass ein mobiles Endgerät 1 einen Erstzugriff auf diese ausführt. Die LTE-Basisstation 2 sendet eine Nachricht auf dem DL-SCH aus, die den Index der Zugriffs-Präambel enthält, eine Erlaubnis bestimmte Ressourcenbereiche nutzen zu dürfen, eine befristet gültige ID auch TC-RNTI (engl. temporary cell radio-network temporary identifier; temporärer Bezeichner für temporäre Funknetzwerkzelle) genannt und eine Zeitkorrektur, so dass das mobile Endgerät 1 die ihm zugewiesenen Ressourcenbereiche zur richtigen Zeit vollständig nutzen kann. Anschließend führt das mobile Endgerät 1 eine Zeitkorrektur durch. Dies wird auch als UL-timing (engl. uplink-timing; dt. Uplink-Zeitkorrektur) bezeichnet. Für den Fall, dass ein mobiles Endgerät 1 keine passende Nachricht empfängt wiederholt es Schritt 1, wobei die Sendeleistung ggf. erhöht wird.

Bevor das mobile Endgerät Nutzerdaten an die LTE-Basisstation 2 senden kann, benötigt es noch eine eindeutige Identität, eine sogenannte C-RNTI (engl. cell radio-network temporary identifier; dt. temorärer Funknetzwerkzellenbezeichner). Um diese zu erhalten wird in dem dritten Schritt eine Nachricht an die LTE-Basisstation gesendet, die u.a. die Identität des mobilen Endgeräts 1 enthält, die zum Erkennen von Kollisionen dient.

Der vierte Schritt dient zum Erkennen von Kollisionen beim Erstzugriff eines mobilen Endgeräts 1 auf eine LTE-Basisstation 2. Die LTE-Basisstation 2 sendet eine Nachricht an das mobile Endgerät 1, wobei die Nachricht die Identität beinhaltet, die von dem mobilen Endgerät 1 im dritten Schritt an die LTE-Basisstation 2 versendet wurde. Das mobile Endgerät 1 vergleicht nun die Identität, die in der empfangenen Nachricht enthalten ist, mit der gesendeten Identität aus Schritt 3. Bei einer Übereinstimmung nutzt das mobile Endgerät die TC-RNTI als C-RNTI. Stimmt die empfangende Identität nicht mit der gesendeten überein, so erkennt das mobile Endgerät 2, dass eine Kollision vorliegt und führt erneut Schritt 1 aus.

Das mobile Endgerät 1 mit einer gültigen C-RNTI kann im Folgenden Nutzerdaten an die LTE-Basisstation 2 übertragen und von dieser empfangen.

Eine weitere Möglichkeit, wie eine Kollision durch die LTE-Basisstation 2 erkannt werden kann, besteht nach Schritt 1, wenn zumindest zwei mobile Endgeräte 1 dieselbe Zugriffs-Präambel nutzten. Dadurch, dass sich die Sendeleistungen der zwei mobilen Endgeräte 1 an der LTE-Basisstation 2 addieren, kann diese aus dem Summensignal nicht mehr die einzelnen Zugriffs-Präambeln dekodieren. Die Schritte 3 und 4 werden auch RRC-Signaling (engl. radio ressource control; dt. Funkressourcenkontrolle) genannt

Wie anhand von Fig. 1 erläutert wurde, ist die Anzahl der Zugriffspräambeln beschränkt, so dass das Auftreten von Kollisionen umso wahrscheinlicher wird, je mehr mobile Endgeräte 1 sich für einen Erstzugriff mit der mobilen LTE-Basisstation 2 verbinden möchten. Fig. 2 beschreibt ein Ausführungsbeispiel der erfindungsgemäßen LTE-Basisstation 2, die das Entstehen von den oben beschriebenen Kollisionen bereits im Vorfeld verhindert. Die erfindungsgemäße LTE-Basisstation 2 weist eine Steuereinheit 3, eine Sende- und Empfangseinheit 4, zumindest eine Antenne 5 und optional eine Speichereinheit 6 auf. Die zumindest eine Antenne 5 ist dabei mit der Sende- und Empfangseinheit 4 verbunden.

Die Sende- und Empfangseinheit 4 ist wiederum mit der Steuereinheit 3 verbunden. Die Sende- und Empfangseinheit 4 nimmt von der Steuereinheit 3 einen Datenstrom entgegen, kodiert diesen und moduliert diesen auf die einzelnen Unterträger auf. Anschließend wird der Datenstrom verstärkt und über die zumindest eine Antenne 5 an die mobilen Endgeräte 1 versendet, die sich im Empfangsbereich der LTE-Basisstation 2 befinden. Auf der anderen Seite demoduliert die Sende- und Empfangseinheit 4 die über die zumindest eine Antenne 5 empfangenen Daten von zumindest einem mobilen Endgerät 1 und übermittelt diese an die Steuereinheit 3. Die Steuereinheit 3 ist weiterhin mit einer Speichereinheit 6 verbunden. Bei den Verbindungen zwischen der Sende- und Empfangseinheit 4, der Steuereinheit 3 und der Speichereinheit 6 handelt es sich um Datenverbindungen, die über geeignete und bekannte Schnittstellen realisiert werden können. Bei der Verbindung zwischen der Antenne 5 und der Sende- und Empfangseinheit 4 handelt es sich bevorzugt um eine koaxiale Verbindung.

Die Steuereinheit 3 verwaltet die zumindest eine Zugriffsressource. Unter verwalten ist zu verstehen, dass die Steuereinheit 3 u.a. die Lage der Zugriffsressource, was die Zeit und die Frequenz betrifft, bestimmt und auch über die Anzahl der Zugriffsressourcen entscheidet. Um die Anzahl an Kollisionen, die bei einem Erstzugriff von einer Vielzahl von mobilen Endgeräten 1 auf die LTE-Basisstation 2 entstehen, verringern zu können, ist über die Steuereinheit 3 eine Priorität einstellbar, die angibt, welches mobile Endgerät 1 sich mit der zumindest einen Zugriffsressource verbinden darf. Die Priorität selbst ist dabei durch die LTE-Basisstation 2 auf zumindest einem bekannten Kanal aussendbar. Den mobilen Endgeräte 1 ist hierzu bevorzugt eine Prioritätsklasse zugewiesen. Ist die durch die LTE-Basisstation 2 ausgesendete Priorität höher als die Prioritätsklasse, zu welcher das mobile Endgerät 1 gehört, dann führt das mobile Endgerät 1 keinen Erstzugriff, wie in Fig. 1 beschrieben, auf die LTE-Basisstation 2 durch. Ist die durch die LTE-Basisstation 2 ausgesendete Priorität niedriger, als die Prioritätsklasse zu der das mobile Endgerät 1 gehört, dann ist es dem mobilen Endgerät 1 erlaubt, sich über einen Erstzugriff mit der LTE-Basisstation 2 zu verbinden.

Hierfür muss die durch die LTE-Basisstation 2 ausgesendete Priorität dem mobilen Endgerät 1 bereits bekannt sein, bevor es gemäß dem ersten Schritt aus Fig. 1 eine Zugriffs-Präambel auswählt und diese an die LTE-Basisstation 2 sendet. Die erfindungsgemäße LTE-Basisstation 2 sendet die Priorität bevorzugt als Broadcast zu einem Zeitpunkt aus, zu dem sich das mobile Endgerät 1 gerade mit der LTE-Basisstation 2 synchronisiert. Aufgrund der Tatsache, dass der MIB nur die notwendigsten Informationen enthält, wird die Priorität bevorzugt in den SIB2 integriert. Hierfür können z.B. drei Bit reserviert werden, so dass insgesamt acht verschiedene Prioritäten einstellbar sind. Eine weitere Möglichkeit die Priorität dem mobilen Endgerät 1 mitzuteilen, besteht darin, einen neuen SIB zu erzeugen. Neben den bisher 13 bekannten SIBs könnte ein 14. SIB erzeugt werden, der die Priorität enthält, die angibt welchen mobilen Endgeräten 1 der Erstzugriff auf die LTE-Basisstation 2 erlaubt ist. Für den neuen SIB14 kann eine Periodizität gewählt werden, so dass der neue SIB14 zum Beispiel gemeinsam mit dem SIB5 auf eine SI abgebildet werden kann. Wie in der Beschreibung zu Fig. 1 erläutert, werden die SIBs auf dem DL-SCH übertragen.

Die Steuereinheit 3 ermittelt bevorzugt die nicht genutzten Zugriffsressourcen und/oder ermittelt die Anzahl an Kollisionen beim Zugriff durch die mobilen Endgeräte 1 auf zumindest eine Zugriffsressource. Neben der Anzahl der nicht genutzten Zugriffsressourcen kann die Steuereinheit 3 auch die Anzahl der nicht genutzten Zugriff-Präambeln ermitteln. Aus den gewonnenen Daten kann die Steuereinheit 3 im Folgenden die Auslastung der Zugriffsressourcen für die Erstzugriffe von einer Vielzahl von mobilen Endgeräten 1 berechnen. Anhand der Auslastung der Zugriffsressourcen wird durch die Steuereinheit 3 die Priorität eingestellt.

Greifen im Vergleich zu den freien Zugriffsressourcen viele mobile Endgeräte 1 auf die LTE-Basisstation 2 zu und/oder treten viele Kollisionen auf, so wird die Priorität durch die Steuereinheit 3 erhöht. Greifen im Gegensatz dazu wenige mobile Endgeräte 1 auf die freien Zugriffsressourcen zu und/oder treten im Vergleich dazu wenige Kollisionen auf, so wird die Priorität durch die Steuereinheit 3 erniedrigt. Auf diese Weise kann das Auftreten von Kollisionen auch bei unterschiedlichen Lastsituationen zuverlässig vermieden werden.

Für den Fall, dass viele mobile Endgeräte 1 auf die LTE-Basisstation 2 zugreifen möchten, kann es sinnvoll sein, dass die Steuereinheit 3 die Priorität während einer bestimmten Zeit, insbesondere während der Nacht, verringert und/oder dass die Steuereinheit 3 die Priorität während einer bestimmten Zeit, insbesondere tagsüber, erhöht. Dadurch kann zum Beispiel sichergestellt werden, dass mobile Endgeräte 1, die einem Benutzer zugeordnet sind, unbeschränkt auf die LTE-Basisstation 2 zugreifen können, wohingegen mobile Endgeräte 1, die mit autonomen Systemen interagieren bevorzugt nachts auf die LTE-Basisstation 2 zugreifen, sodass die Last gleichmäßig auf einen Tag verteilt werden kann.

Die Steuereinheit 3 kann die Priorität auch anhand von Erfahrungswerten und/oder durch Auswerten von Statusinformationen erhöhen oder verringern. Die Erfahrungswerte beinhalten z.B. die Anzahl der Erstzugriffe von mobilen Endgeräten 1 auf eine LTE-Basisstation zu einem bestimmten Zeitpunkt in der Vergangenheit. Die Steuereinheit 3 kann aus solchen Erfahrungswerten z.B. Erwartungswerte berechnen und die Priorität entsprechend den Erwartungswerten einstellen. Erfahrungswerte von Großveranstaltungen beispielsweise von Sportveranstaltungen die regelmäßig an Wochenenden stattfinden, können dazu verwendet werden, um die Priorität entsprechend der zu erwartenden Anzahl an Besuchern zu Beginn der Großveranstaltung einzustellen. Auch bei einem Jahreswechsel können Erfahrungswerte, die in den Vorjahren aufgezeichnet wurden, dazu verwendet werden, um die Priorität entsprechend zu erhöhen, so dass die Wahrscheinlichkeit von Kollisionen auch bei einer erhöhten Anzahl von mobilen Endgeräten verringert wird.

Die Statusinformationen beinhalten beispielsweise Informationen über die LTE-Basisstation 2 selbst. Wird die LTE-Basisstation 2 neu gestartet und ist die LTE-Basisstation 2 die einzige Basisstation, die in einem bestimmten Bereich für die Versorgung von mobilen Endgeräten 1 zuständig ist, dann ist zu erwarten, dass nach einem Neustart der LTE-Basisstation 2 sich sämtliche in dem Abdeckungsbereich der LTE-Basisstation befindlichen mobilen Endgeräte 1 erneut in die LTE-Basisstation 2 anmelden möchten. Die Statusinformationen erfassen auch Stromausfälle von einzelnen Stadtteilen, weil in diesem Fall sich eine Vielzahl von mobilen Endgeräten 1 nach dem Wiederherstellen der elektrischen Stromversorgung an der LTE-Basisstation 2 anmelden möchten. Durch Auswerten solcher Statusinformationen kann die Priorität kurzfristig erhöht werden, wodurch die Wahrscheinlichkeit für das Auftreten von Kollisionen verringert wird.

Weiterhin erlaubt es die Steuereinheit 3, dass die Prioritätsklasse eines mobilen Endgeräts 1 durch die LTE-Basisstation 2 veränderbar ist, sobald das mobile Endgerät 1 mit der LTE-Basisstation 2 verbunden ist. Damit ist es möglich, dass auch bei mobilen Endgeräten 1, die einem Benutzer zugeordnet sind, unterschiedliche Prioritätsklassen eingestellt werden können. Ist es dem mobilen Endgerät 1 eines Benutzers gelungen, sich während einer Großveranstaltung an der LTE-Basisstation 2 anzumelden, dann kann nach dem erfolgreichen Anmeldevorgang die Prioritätsklasse des mobilen Endgeräts 1 geändert, bevorzugt verringert werden. Dadurch erhöht sich die Wahrscheinlichkeit, dass sich ein anderes mobiles Endgerät 1, welches sich bei der vorherigen Großveranstaltung nicht an der LTE-Basisstation 2 anmelden konnte, bei einer nächsten Großveranstaltung schneller an der LTE-Basisstation 2 anmelden kann. Dadurch wird erreicht, dass die Wahrscheinlichkeit für einen erfolgreichen Erstzugriff aller mobilen Endgeräte 1, die einem Benutzer zugeordnet sind, in etwa gleich groß ist. Nach einer bestimmten Zeitdauer wird die Prioritätsklasse wieder rückgesetzt.

Mobile Endgeräte 1, die direkt mit dem Benutzer interagieren oder diesem zugeordnet sind, werden bevorzugt einer höheren Prioritätsklasse zugeordnet, als mobile Endgeräte 1, die zur M2M-Kommunikation dienen. Dadurch werden unter Umständen störende Wartezeiten bis zu einem erfolgreichen Erstzugriff des mobilen Endgeräts 1 mit der LTE-Basisstation 2 vermieden. Mobile Endgeräte 1, die zur M2M-Kommunikation dienen und beispielsweise in Fahrkartenautomaten eingesetzt werden, werden meistens nicht als so zeitkritisch betrachtet, wie mobile Endgeräte 1, die einem Benutzer zugeordnet sind.

Weiterhin erlaubt es die Steuereinheit 3 die Anzahl der Zugriffsressourcen zu erhöhen und/oder zu verringern. Bei Einsatz einer FDD kann sich eine Zugriffsressource jede Millisekunde bis hin zu einer alle 20 ms befinden. Führen plötzlich eine Vielzahl von mobilen Endgeräten 1 einen Erstzugriff auf die LTE-Basisstation 2 aus, dann kann zum einen die Priorität und zum anderen die Anzahl an Zugriffsressourcen erhöht werden, um dadurch die Anzahl an Kollisionen zu verringern bei gleichzeitiger Zunahme der Anzahl an erfolgreichen Erstzugriffen durch die Vielzahl von mobilen Endgeräten 1. Für den Fall, dass wenige mobile Endgeräte 1 auf die LTE-Basisstation 2 zugreifen, kann die Steuereinheit 3 die Anzahl an Zugriffsressourcen verringern. Dadurch steht mehr Bandbreite für die Datenübertragung zur Verfügung.

Für den Fall, dass die Priorität über den SIB2 übertragen wird, kann bei einer Periodenzeit von 160 ms die Priorität ca. sieben Mal pro Sekunde geändert werden, was für sämtliche Anwendungen ausreichend ist.

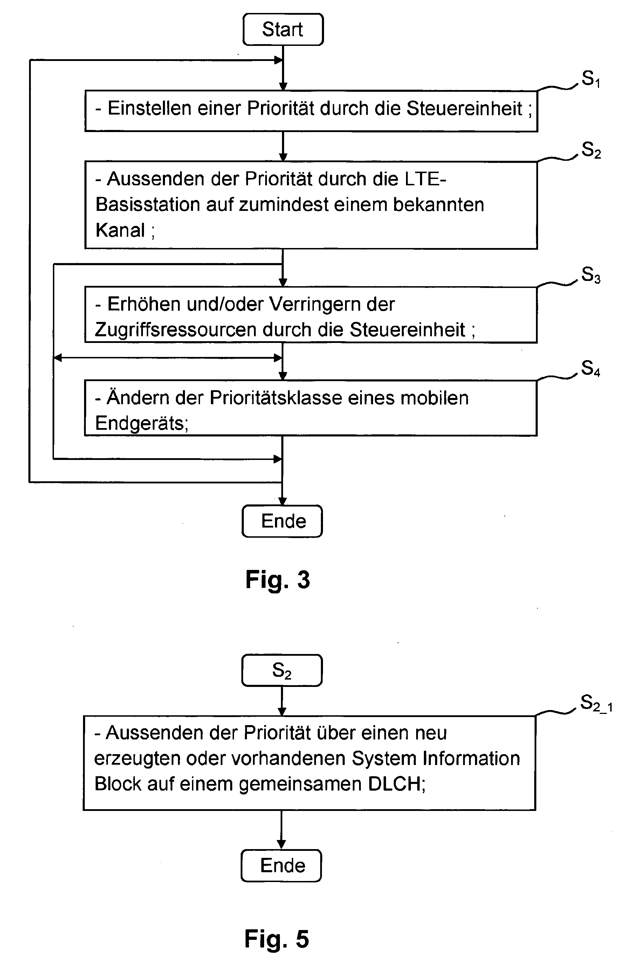

Fig. 3 zeigt ein Ausführungsbeispiel eines Flussdiagramms für das erfindungsgemäße Verfahren der LTE-Basisstation 2 zum Einstellen einer Priorität. In einem ersten Verfahrensschritt S₁ wird die Priorität durch eine Steuereinheit 3 eingestellt. Die Priorität gibt dabei an, welches mobile Endgerät 1 sich mit der zumindest einen Zugriffsressource verbinden darf. Die Priorität kann grundsätzlich beliebig fein eingestellt werden. Allerdings haben Untersuchungen gezeigt, dass es ausreichend ist, wenn für die Priorität acht verschiedene Stufen zur Verfügung stehen, so dass insgesamt 3 Bit benötigt werden. Je nach Anwendungsfall können auch weniger oder mehr Prioritätsstufen notwendig sein, wodurch weniger oder mehr als 3 Bit benötigt werden.

In einem zweiten Verfahrensschritt S₂ wird die Priorität durch die LTE-Basisstation 2 auf zumindest einem bekannten Kanal ausgesendet. Unter zumindest einem bekannten Kanal ist zu verstehen, dass das mobile Endgerät 1 in der Lage sein muss, die Priorität zu erkennen, um gegebenenfalls auf einen Erstzugriff auf die LTE-Basisstation 2 zu verzichten. Die Priorität wird dabei bevorzugt durch einen Broadcast ausgesendet.

Weiterhin kann in einem optionalen dritten Verfahrensschritt S₃ die Anzahl der Zugriffsressourcen durch die Steuereinheit 3 erhöht und/oder verringert werden. Für den Fall, dass trotz einer Erhöhung der Priorität eine Vielzahl von mobilen Endgeräten 1, die z.B. einem Benutzer zugeordnet sind, einen Erstzugriff auf eine LTE-Basisstation 2 durchführen, kann damit die Zeitdauer bis zum erfolgten Erstzugriff gesenkt werden kann.

Optional kann in einem vierten Verfahrensschritt S₄ die Prioritätsklasse eines mobilen Endgeräts 1 durch die Steuereinheit 3 geändert werden, sobald das mobile Endgerät 1 mit der LTE-Basisstation 2 verbunden ist. Dadurch wird beispielsweise erreicht, dass mobile Endgeräte 1, die verschiedenen Benutzern zugeordnet sind, im Mittel die gleiche Zeitdauer für einen erfolgreichen Erstzugriff auf eine LTE-Basisstation 2 benötigen. Ist ein Erstzugriff von einem mobilen Endgerät 1, dass einem Benutzer zugeordnet ist, erfolgreich verlaufen, dann kann die Prioritätsklasse, der das mobile Endgerät 1 zugeordnet ist, gesenkt werden, damit bei einem erneuten Erstzugriff des mobilen Endgeräts 1 ein anderes mobiles Endgeräts 1, welches zuvor benachteiligt wurde, den Vortritt erhält. Weiterhin lassen sich auf diese Art und Weise sehr einfach mobile Endgeräte 1, die zum Beispiel dem Rettungsdienst zugeordnet sind, gegenüber allen anderen mobilen Endgeräten 1 priorisieren. Nachdem der optionale Verfahrensschritt S₄ beendet wurde, kann der Verfahrensschritt S₁ erneut ausgeführt werden, indem eine neue Priorität durch die Steuereinheit 3 für geänderte Bedingungen erneut eingestellt wird.

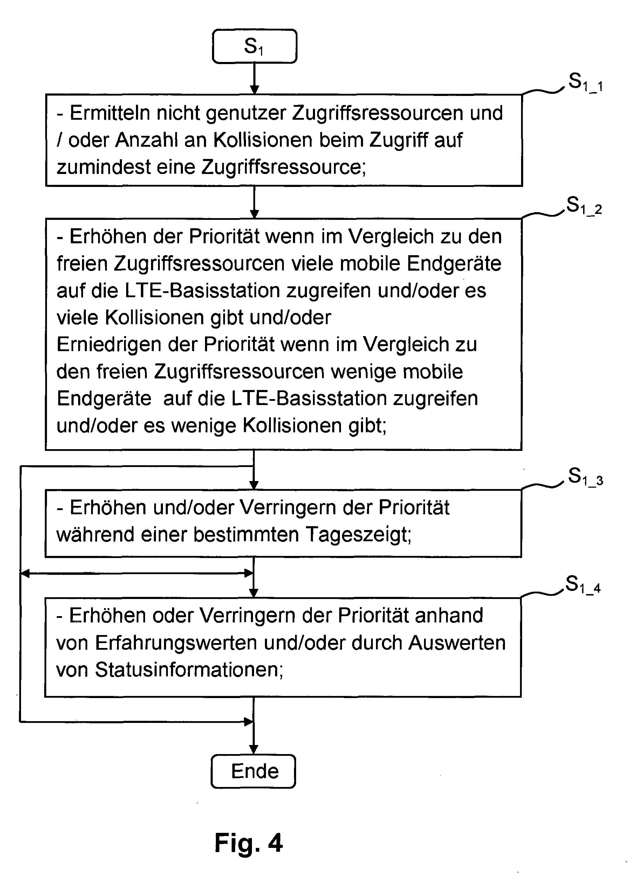

Fig. 4 zeigt ein Ausführungsbeispiel für das erfindungsgemäße Verfahren der LTE-Basisstation 2, welches das Einstellen der Priorität genauer erläutert. Das Ablaufdiagramm aus Fig. 4 erläutert dabei den Verfahrensschritt S₁ genauer. Der Verfahrensschritt S₁ enthält einen Verfahrensschritt S_{1_1} in dem die Anzahl der nicht genutzten Zugriffsressourcen und/oder die Anzahl der Kollisionen beim Zugriff auf die zumindest eine Zugriffsressource durch die Steuereinheit 3 ermittelt wird. Die Anzahl nicht genutzter Zugriffsressourcen schließt auch die Anzahl der nicht genutzten Zugriffs-Präambeln ein.

In einem weiteren Verfahrensschritt S_{1_2} wird die Priorität durch die Steuereinheit 3 erhöht, wenn im Vergleich zu den freien Zugriffsressourcen viele mobile Endgeräte 1 auf die LTE-Basisstation 2 zugreifen und/oder wenn es viele Kollisionen gibt. Im Gegensatz dazu wird die Priorität durch die Steuereinheit 3 erniedrigt, wenn im Vergleich zu den freien Zugriffsressourcen wenige mobile Endgeräte 1 auf die LTE-Basisstation 2 zugreifen und/oder wenn es wenige Kollisionen gibt. Unter dem Wortlaut "viele Kollisionen" und unter dem Wortlaut "wenige Kollisionen" ist zu verstehen, dass die Anzahl der Kollisionen mit einem frei Wählbaren Schwellwert verglichen wird. In den Schwellwert geht zum Beispiel die Größe des Bereichs ein, den die LTE-Basisstation 2 abdeckt, aber auch die Anzahl der im Mittel aktiven mobilen Endgeräte 1. Unter dem Wortlaut "viele mobile Endgeräte 1" und dem Wortlaut "wenige mobile Endgeräte 1" ist zu verstehen, dass wenn zum Beispiel 90% der freien Zugriffsressourcen belegt sind, die Priorität automatisch erhöht wird und wenn weniger als zum Beispiel 90% der Zugriffsressourcen belegt sind, die Priorität erniedrigt wird.

In einem weiteren optionalen Verfahrensschritt S_{1_3} wird die Priorität während einer bestimmten Tageszeit, insbesondere während der Nacht, durch die Steuereinheit 3 verringert und/oder während einer bestimmten Tageszeit, insbesondere tagsüber, durch die Steuereinheit 3 erhöht. Dadurch wird erreicht, dass die Erstzugriffe von mobilen Endgeräten 1 die einer niedrigen Prioritätsklasse angehören, wie zum Beispiel mobile Endgeräte 1 die zur M2M-Kommunikation dienen, auf die Nacht verschoben werden. Getränkeautomaten, die die Füllstände an ein zentrales Steuersystem übermitteln, müssen nicht zwangsläufig zu Spitzenzeiten auf die LTE-Basisstation 2 zugreifen. Dadurch wird erreicht, dass eine gleichmäßige Auslastung der LTE-Basisstation 2 über den gesamten Tag erreicht wird.

Optional kann der Verfahrensschritt S₁ einen weiteren verfahrensschritt S_{1_4} enthalten. Innerhalb dieses Verfahrensschritts wird die Priorität anhand von Erfahrungswerten und/oder durch Auswerten von Statusinformationen durch die Steuereinheit 3 erhöht und/oder verringert. Besonders vorteilhaft ist, dass vorangegangene Ereignisse, die Ähnlichkeiten zu zukünftigen Ereignissen aufweisen können, durch die Steuereinheit 3 mit in Betracht gezogen werden. Diese Erfahrungswerte sind in der Speichereinheit 6 abgelegt. Es ist auch möglich, dass die Erfahrungswerte von anderen LTE-Basisstationen 2 stammen, wenn zum Beispiel Großveranstaltungen wie Konzerte in zeitlichem Abstand in verschiedenen Städten stattfinden. Bei den Statusinformationen handelt es sich um Stromausfälle und/oder das Neustarten der LTE-Basisstation 2. Gerade nach einem solchen Ereignis wird eine Vielzahl von mobilen Endgeräten 1 versuchen über einen Erstzugriff wieder mit der LTE-Basisstation 2 in Kontakt zu treten.

Fig. 5 zeigt ein weiteres Ausführungsbeispiel eines Flussdiagramms für das erfindungsgemäße Verfahren der LTE-Basisstation 2 das das Aussenden der Priorität genauer erläutert. In Fig. 5 ist der Verfahrensschritt S_{2_1} dargestellt, der eine Möglichkeit erläutert, wie der Verfahrensschritt S₂ näher beschrieben werden kann. Die Priorität wird in diesem Verfahrensschritt S_{2_1} über einen vorhandenen oder neuerzeugten SIB, der auf einem gemeinsamen Downlink-Kanal übertragen wird, ausgesendet. Bevorzugt wird der SIB2 erweitert, sodass dieser z.B. drei zusätzliche Bit beinhaltet, um darüber acht verschiedene Prioritäten einstellen zu können. Es ist allerdings auch möglich, einen neuen SIB zu erzeugen, der in regelmäßigen Abständen entsprechend den bereits vorhandenen SIBs auf dem gemeinsamen Downlink-Kanal übertragen wird. Hierzu kann zum Beispiel ein SIB14 erzeugt werden. Weil anzunehmen ist, dass die Priorität nicht mehrfach innerhalb einer Sekunde geändert werden muss, ist es ausreichend, wenn die Periodendauer, mit welcher der neu erzeugte SIB ausgesendet wird, groß ist, um dadurch wertvolle Ressourcen zu sparen.

Im Rahmen der Erfindung sind alle beschriebenen und/oder gezeichneten Merkmale beliebig miteinander kombinierbar. Der von der 3GPP ausgearbeitete Standard zu LTE wird im Rahmen der Beschreibung vollumfänglich in diese aufgenommen.

## Patentansprüche

1. Verfahren zum Reduzieren von Kollisionen beim Zugriff einer Vielzahl von mobilen Endgeräten (1) auf eine LTE-Basisstation (2), die eine Steuereinheit (3) aufweist, wobei die Steuereinheit (3) zumindest eine Zugriffsressource verwaltet,
wobei den mobilen Endgeräten (1) eine Prioritätsklasse zugeweisen ist und
wobei das Verfahren die nachfolgenden Verfahrensschritte beinhaltet:
- Einstellen (S₁) einer Priorität durch die Steuereinheit (3), die angibt, welches mobile Endgerät (1) sich mit der zumindest einen Zugriffsressource verbinden darf;
- Aussenden (S₂) der Priorität durch die LTE-Basisstation (2) auf zumindest einem bekannten Kanal, wobei das mobile Endgerät (1) dann keinen Erstzugriff auf die LTE-Basisstation (2) durchführt, wenn die durch die LTE-Basisstation (2) ausgesendete Priorität, höher ist, als die Prioritätsklasse des mobilen Endgeräts (1).

2. Verfahren nach Anspruch 1,
**gekennzeichnet durch,**
folgende Verfahrensschritte:
- Ermitteln (S_{1_1}) der nicht genutzten Zugriffsressourcen **durch** die Steuereinheit (3) und/oder Ermitteln einer Anzahl an Kollisionen beim Zugriff auf zumindest eine Zugriffsressource;

3. Verfahren nach einem der Ansprüche 1 oder 2,
**gekennzeichnet durch,**
folgende Verfahrensschritte:
- Erhöhen (S_{1_2}) der Priorität, wenn im Vergleich zu den freien Zugriffsressourcen viele mobile Endgeräte (1) auf die LTE-Basisstation (2) zugreifen und/oder es viele Kollisionen gibt und/oder Erniedrigen der Priorität, wenn im Vergleich zu den freien Zugriffsressourcen wenige mobile Endgeräte (1) auf die LTE-Basisstation (2) zugreifen und/oder es wenige Kollisionen gibt.

4. Verfahren nach einem der Ansprüche 1 bis 3,
**gekennzeichnet durch,**
folgende Verfahrensschritte:
- Aussenden (S_{2_1}) der Priorität über einen vorhandenen oder neu erzeugten Systeminformationsbereich, der auf einem gemeinsamen Downlink-Kanal übertragen wird.

5. Verfahren nach einem der Ansprüche 1 bis 4,
**gekennzeichnet durch,**
folgende Verfahrensschritte:
- Verringern (S_{1_3}) der Priorität während einer bestimmten Tageszeit, insbesondere während der Nacht und/oder Erhöhen der Priorität während einer bestimmten Tageszeit, insbesondere Tagsüber.

6. Verfahren nach einem der Ansprüche 1 bis 5,
**gekennzeichnet durch,**
folgende Verfahrensschritte:
- Erhöhen (S_{1_4}) und/oder Verringern der Priorität anhand von Erfahrungswerten und/oder **durch** Auswerten von Statusinformationen.

7. Verfahren nach einem der Ansprüche 1 bis 6,
**gekennzeichnet durch,**
folgende Verfahrensschritte:
- Erhöhen (S₃) und/oder Verringern der Zugriffsressourcen **durch** die Steuereinheit (3).

8. Verfahren nach einem der Ansprüche 1 bis 7,
**gekennzeichnet durch,**
folgende Verfahrensschritte:
- Ändern (S₄) einer Prioritätsklasse eines mobilen Endgeräts (1) sobald dieses mit der LTE-Basisstation (2) verbunden ist.

9. Verfahren nach einem der Ansprüche 1 bis 8,
**dadurch gekennzeichnet,**
**dass** mobile Endgeräte (1), die direkt mit dem Benutzer interagieren, einer höheren Prioritätsklasse zugeordnet sind, als mobile Endgeräte (1) zur Maschine-zu-Maschine-Kommunikation dienen.

10. Verfahren nach Anspruch 6,
**dadurch gekennzeichnet,**
**dass** es sich bei den Statusinformationen um Stromausfälle und/oder das Neustarten der LTE-Basisstation (2) handelt.

11. LTE-Basisstation (2) zum Reduzieren von Kollisionen beim Zugriff einer Vielzahl von mobilen Endgeräten (1) auf die LTE-Basisstation (2), aufweisend eine Steuereinheit (3),
wobei die Steuereinheit (3) zumindest eine Zugriffsressource verwaltet,
wobei die LTE-Basisstation (2) ausgebildet ist, um den mobilen Endgeräten (1) eine Prioritätsklasse zuzuweisen, wobei eine Priorität, die angibt, welches mobile Endgerät (1) sich mit der zumindest einen Zugriffsressource verbinden darf, durch die Steuereinheit (3) einstellbar ist,
wobei die Priorität durch die LTE-Basisstation (2) auf zumindest einem bekannten Kanal aussendbar ist und
wobei die LTE-Basisstation (2) ausgebildet ist, um das mobile Endgerät (1) zu veranlassen, dann keinen Erstzugriff auf die LTE-Basisstation (2) durchzuführen, wenn die durch die LTE-Basisstation (2) ausgesendete Priorität höher ist, als die Prioritätsklasse des mobilen Endgeräts (1).

12. LTE-Basisstation nach Anspruch 11,
**dadurch gekennzeichnet,**
**dass** die nicht genutzten Zugriffsressourcen und/oder die Anzahl an Kollisionen beim Zugriff durch die mobilen Endgeräte (1) auf zumindest eine Zugriffsressource durch die Steuereinheit (3) ermittelbar sind.

13. LTE-Basisstation nach Anspruch 11 oder 12,
**dadurch gekennzeichnet,**
**dass** die Priorität durch die Steuereinheit (3) erhöhbar ist, wenn im Vergleich zu den freien Zugriffsressourcen viele mobile Endgeräte (1) auf die LTE-Basisstation (2) zugreifen und/oder viele Kollisionen auftreten und/oder dass die Priorität durch die Steuereinheit (3) erniedrigbar ist, wenn im Vergleich zu den freien Zugriffsressourcen wenige mobile Endgeräte (1) auf die LTE-Basisstation (2) zugreifen und/oder wenige Kollisionen auftreten.

14. LTE-Basisstation nach einem der Ansprüche 11 bis 13,
**dadurch gekennzeichnet,**
**dass** die Priorität über einen vorhandenen oder neu erzeugten Systeminformationsbereich auf einem gemeinsamen Downlink-Kanal durch die LTE-Basisstation (2) übertragbar ist.

15. LTE-Basisstation nach einem der Ansprüche 11 bis 14,
**dadurch gekennzeichnet,**
**dass** die Priorität während einer bestimmten Zeit, insbesondere während der Nacht, durch die die Steuereinheit (3) verringerbar ist und/oder dass die Priorität während einer bestimmten Zeit, insbesondere Tagsüber, durch die Steuereinheit (3) erhöhbar ist.

16. LTE-Basisstation nach einem der Ansprüche 11 bis 15,
**dadurch gekennzeichnet,**
**dass** die Steuereinheit (3) die Priorität anhand von Erfahrungswerten und/oder durch Auswerten von Statusinformationen erhöht und/oder verringert.

17. LTE-Basisstation nach einem der Ansprüche 11 bis 16,
**dadurch gekennzeichnet,**
**dass** die Prioritätsklasse eines mobilen Endgeräts (1) durch die LTE-Basisstation (2) veränderbar ist, sobald dieses mit der LTE-Basisstation (2) verbunden ist.

18. LTE-Basisstation nach einem der Ansprüche 11 bis 17,
**dadurch gekennzeichnet,**
**dass** die Zugriffsressourcen durch die Steuereinheit (3) erhöhbar und/oder verringerbar sind.

19. LTE-Basisstation nach einem der Ansprüche 11 bis 18,
**dadurch gekennzeichnet,**
**dass** mobilen Endgeräten (1), die direkt mit dem Benutzer interagieren einer höheren Prioritätsklasse zugeordnet sind, als mobile Endgeräte (1) für die zur Maschine-zu-Maschine-Kommunikation dienen.

20. LTE-Basisstation nach Anspruch 16,
**dadurch gekennzeichnet,**
**dass** es sich bei den Statusinformationen um Stromausfälle und/oder das Neustarten der LTE-Basisstation (2) handelt.

## Claims

1. Method for reducing collisions when a multiplicity of mobile terminals (1) access an LTE base station (2) that has a control unit (3),
wherein the control unit (3) manages at least one access resource,
wherein the mobile terminals (1) have an allocated priority class, and
wherein the method contains the following method steps:
- a priority is set (S₁) by the control unit (3), which indicates which mobile terminal (1) is permitted to connect to the at least one access resource;
- the priority is transmitted (S₂) by the LTE base station (2) on at least one known channel,
wherein the mobile terminal (1) performs no initial access to the LTE base station (2) if the priority transmitted by the LTE base station (2) is higher than the priority class of the mobile terminal (1).

2. Method according to Claim 1,
**characterized by**
the following method steps:
- the unused access resources are ascertained (S_{1_1}) by the control unit (3) and/or a number of collisions during access to at least one access resource is ascertained.

3. Method according to either of Claims 1 and 2,
**characterized by**
the following method steps:
- the priority is raised (S_{1_2}) if, in comparison with the free access resources, many mobile terminals (1) access the LTE base station (2) and/or there are many collisions and/or the priority is lowered if, in comparison with the free access resources, few mobile terminals (1) access the LTE base station (2) and/or there are few collisions.

4. Method according to one of Claims 1 to 3,
**characterized by**
the following method steps:
- the priority is transmitted (S_{2_1}) via an existent or freshly produced system information area that is transmitted on a common downlink channel.

5. Method according to one of Claims 1 to 4,
**characterized by**
the following method steps:
- the priority is decreased (S_{1_3}) during a particular time of day, particularly during the night, and/or the priority is raised during a particular time of day, particularly during the day.

6. Method according to one of Claims 1 to 5,
**characterized by**
the following method steps:
- the priority is raised (S_{1_4}) and/or decreased on the basis of empirical values and/or by evaluating status information.

7. Method according to one of Claims 1 to 6,
**characterized by**
the following method steps:
- the access resources are increased (S₃) and/or decreased by the control unit (3).

8. Method according to one of Claims 1 to 7,
**characterized by**
the following method steps:
- a priority class of a mobile terminal (1) is changed (S₄) as soon as said mobile terminal is connected to the LTE base station (2).

9. Method according to one of Claims 1 to 8,
**characterized**
**in that** mobile terminals (1) that interact directly with the user are associated with a higher priority class than mobile terminals (1) that are used for machine-to-machine communication.

10. Method according to Claim 6,
**characterized**
**in that** the status information is power failures and/or the restarting of the LTE base station (2).

11. LTE base station (2) for reducing collisions when a multiplicity of mobile terminals (1) access the LTE base station (2), having a control unit (3),
wherein the control unit (3) manages at least one access resource,
wherein the LTE base station (2) is designed to allocate a priority class to the mobile terminals (1), wherein a priority that indicates which mobile terminal (1) is permitted to connect to the at least one access resource can be set by the control unit (3),
wherein the priority can be transmitted by the LTE base station (2) on at least one known channel and
wherein the LTE base station (2) is designed to prompt the mobile terminal (1) to perform no initial access to the LTE base station (2) if the priority transmitted by the LTE base station (2) is higher than the priority class of the mobile terminal (1).

12. LTE base station according to Claim 11,
**characterized**
**in that** the unused access resources and/or the number of collisions during access by the mobile terminals (1) to at least one access resource can be ascertained by the control unit (3).

13. LTE base station according to Claim 11 or 12,
**characterized**
**in that** the priority can be raised by the control unit (3) if, in comparison with the free access resources, many mobile terminals (1) access the LTE base station (2) and/or many collisions occur and/or
**in that** the priority can be lowered by the control unit (3) if, in comparison with the free access resources, few mobile terminals (1) access the LTE base station (2) and/or few collisions occur.

14. LTE base station according to one of Claims 11 to 13,
**characterized**
**in that** the priority can be transmitted via an existent or freshly produced system information area on a common downlink channel by the LTE base station (2).

15. LTE base station according to one of Claims 11 to 14,
**characterized**
**in that** the priority can be decreased by the control unit (3) during a particular time, particularly during the night, and/or
**in that** the priority can be raised by the control unit (3) during a particular time, particularly during the day.

16. LTE base station according to one of Claims 11 to 15,
**characterized**
**in that** the control unit (3) raises and/or decreases the priority on the basis of empirical values and/or by evaluating status information.

17. LTE base station according to one of Claims 11 to 16,
**characterized**
**in that** the priority class of a mobile terminal (1) can be altered by the LTE base station (2), as soon as said mobile terminal is connected to the LTE base station (2).

18. LTE base station according to one of Claims 11 to 17,
**characterized**
**in that** the access resources can be increased and/or decreased by the control unit (3).

19. LTE base station according to one of Claims 11 to 18,
**characterized**
**in that** mobile terminals (1) that interact directly with the user are associated with a higher priority class than mobile terminals (1) that are used for machine-to-machine communication.

20. LTE base station according to Claim 16,
**characterized**
**in that** the status information is power failures and/or the restarting of the LTE base station (2).

## Revendications

1. Procédé pour réduire les collisions lors de l'accès d'une pluralité de terminaux mobiles (1) à une station de base LTE (2), qui possède une unité de commande (3),
dans lequel l'unité de commande (3) gère au moins une ressource d'accès,
dans lequel une classe de priorité est assignée aux terminaux mobiles (1) et
dans lequel le procédé comporte les étapes de procédé suivantes :
- la détermination (S₁) d'une priorité par l'unité de commande (3), qui indique, quel terminal mobile peut se connecter avec la au moins une ressource d'accès ;
- l'envoi (S₂) de la priorité par la station de base LTE (2) sur au moins un canal connu, où le terminal mobile (1) ne traverse aucun premier accès à la station de base LTE (2), lorsque la priorité envoyée par la station de base LTE (2) est supérieure à la classe de priorité du terminal mobile (1).

2. Procédé selon la revendication 1, **caractérisé par** les étapes de procédé suivantes :
- la détermination (S_{1_1}) des ressources d'accès non utilisées par l'unité de commande (3) et/ou la détermination d'une pluralité de collisions lors de l'accès à au moins une ressource d'accès.

3. Procédé selon la revendication 1 ou 2, **caractérisé par** les étapes de procédé suivantes :
- l'élévation (S_{1_2}) de la priorité, lorsque, en comparaison à des ressources libres d'accès, de nombreux terminaux mobiles (1) accèdent à la station de base LTE (2) et/ou il se produit de nombreuses collisions et/ou l'abaissement de la priorité, lorsque, en comparaison aux ressources libres d'accès, peu de terminaux mobiles (1) accèdent à la station de base LTE (2) et/ou il se produit peu de collisions.

4. Procédé selon une revendication 1 à 3, **caractérisé par** les étapes de procédé suivantes :
- l'envoi (S_{2_1}) de la priorité par l'intermédiaire d'un domaine d'information de système existant ou nouvellement généré, qui est transmis sur un canal en liaison descendante commun.

5. Procédé selon une revendication 1 à 4, **caractérisé par** les étapes de procédé suivantes :
- la réduction (S_{1_3}) de la priorité pendant un moment de la journée déterminé, en particulier pendant la nuit et/ou l'élévation de la priorité pendant un moment de la journée déterminé, en particulier le jour.

6. Procédé selon l'une des revendications 1 à 5, **caractérisé par** les étapes de procédé suivantes :
- l'élévation (S_{1_4}) et/ou la réduction de la priorité en regard des valeurs empiriques et/ou grâce à l'évaluation des informations d'état.

7. Procédé selon l'une des revendications 1 à 6, **caractérisé par** les étapes de procédé suivantes :
- l'augmentation (S₃) et/ou la réduction des ressources d'accès par l'unité de commande (3).

8. Procédé selon l'une des revendications 1 à 7, **caractérisé par** les étapes de procédé suivantes :
- le changement (S₄) d'une classe de priorité d'un terminal mobile (1) dès que celui-ci est relié à la station de base LTE (2).

9. Procédé selon l'une des revendications 1 à 8, **caractérisé en ce que**
les terminaux mobiles (1), qui interagissent directement avec l'utilisateur, sont associés à une classe de priorité plus élevée que les terminaux mobiles (1) utilisés dans une communication machine-machine.

10. Procédé selon la revendication 6, **caractérisé en ce que**
concernant les informations d'état, il s'agit de pannes de courant et/ou du redémarrage de la station de base LTE (2).

11. Station de base LTE (2) pour réduire les collisions lors de l'accès d'une pluralité de terminaux mobiles (1) à une station de base LTE (2), comportant une unité de commande (3),
dans laquelle l'unité de commande (3) gère au moins une ressource d'accès,
dans laquelle la station de base LTE (2) est réalisée, pour associer une classe de priorité aux terminaux mobiles (1),
dans laquelle une priorité, qui indique, quel terminal mobile (1) peut se connecter à la au moins une ressource d'accès, peut être déterminée par l'unité de commande (3),
dans laquelle la priorité peut être envoyée par la station de base LTE (2) sur au moins un canal connu et
dans laquelle la station de base LTE (2) est réalisée, pour amener le terminal mobile (1) à ne traverser aucun premier accès à la station de base LTE (2), lorsque la priorité envoyée par la station de base LTE (2) est plus élevée que la classe de priorité du terminal mobile (1).

12. Station de base LTE selon la revendication 11, caractérisée ce que
les ressources d'accès non utilisées et/ou la pluralité de collisions lors de l'accès par les terminaux mobiles (1) à au moins une ressource d'accès peuvent être déterminées par l'unité de commande (3).

13. Station de base LTE selon la revendication 11 ou 12, **caractérisée en ce que**
la priorité peut être élevée par l'unité de commande (3), lorsque, en comparaison aux ressources libres d'accès, de nombreux terminaux mobiles (1) accèdent à la station de base LTE (2) et/ou il se produit de nombreuses collisions et/ou
**en ce que** la priorité peut être réduite par l'unité de commande (3), lorsque, en comparaison aux ressources libres d'accès, peu de terminaux mobiles (1) accèdent à la station de base LTE (2) et/ou il se produit peu de collisions.

14. Station de base LTE selon l'une des revendications 11 à 13, **caractérisée en ce que**
la priorité peut être transmise par la station de base LTE (2) par l'intermédiaire d'un domaine d'information de système existant ou nouvellement généré sur un canal en liaison descendante commun.

15. Station de base LTE selon l'une des revendications 11 à 14, **caractérisée en ce que**
la priorité est réduite par l'unité de commande (3) pendant un temps déterminé, en particulier pendant la nuit, et/ou
**en ce que** la priorité peut être élevée par l'unité de commande (3) pendant un temps déterminé, en particulier le jour.

16. Station de base LTE selon l'une des revendications 11 à 15, **caractérisée en ce que**
l'unité de commande (3) augmente et/ou réduit la priorité en regard des valeurs empiriques et/ou grâce à l'évaluation des informations d'état.

17. Station de base LTE selon l'une des revendications 11 à 16, **caractérisée en ce que**
la classe de priorité d'un terminal mobile (1) peut être modifiée par la station de base LTE (2), dès que celui-ci est relié à la station de base LTE (2).

18. Station de base LTE selon l'une des revendications 11 à 17, **caractérisée en ce que**
les ressources d'accès peuvent être augmentées et/réduites par l'unité de commande (3).

19. Station de base LTE selon l'une des revendications 11 à 18, **caractérisée en ce que**
les terminaux mobiles (1), qui interagissent directement avec l'utilisateur, sont associés à une classe de priorité plus élevée, que les terminaux mobiles (1) utilisés pour la communication machine-machine.

20. Station de base LTE selon la revendication 16, **caractérisée en ce que**
dans le cas des informations d'état, il s'agit de pannes de courant et/ou du redémarrage de la station de base LTE (2).
